# EUROPÄISCHE PATENTSCHRIFT

(11) **EP 3 684 863 B1**
(45) Veröffentlichungstag und Bekanntmachung des Hinweises auf die Patenterteilung: **30.07.2025**
(21) Anmeldenummer: 18731959.5
(22) Anmeldetag: 05.06.2018
(51) Int. Cl.: C09C 1/00, B42D 25/40, B44F 3/00, B44C 1/22, B44C 1/24, C09C 3/04

(54) **VERFAHREN ZUR HERSTELLUNG VON PIGMENTEN MIT VORGEGEBENER INNEN- UND/ODER AUSSENKONTOUR UNTER VERWENDUNG EINER RISSBILDENDEN SCHICHT**
METHOD FOR PRODUCING PIGMENT FRAGMENTS WITH A PREDEFINED INTERNAL AND/OR EXTERNAL CONTOUR USING A CRACK-FORMING LAYER
PROCÉDÉ DE PRODUCTION DE PIGMENTS À PROFIL INTÉRIEUR ET/OU EXTÉRIEUR PRÉDÉFINIS AU MOYEN D'UNE COUCHE FORMANT DES CRAQUELURES

(30) Priorität: 21.09.2017 DE 102017008831
(43) Veröffentlichungstag der Anmeldung: 29.07.2020
(73) Patentinhaber: Giesecke+Devrient Currency Technology GmbH, 81677 München (DE)
(72) Erfinder: SCHERER, Maik Rudolf Johann, 82491 Grainau (DE); SCHERER, Kai Herrmann, 82491 Grainau (DE); DEHMEL, Raphael, 83115 Neubeuern (DE); HUNGER, Christoph, 83734 Hausham (DE)
(74) Vertreter: Giesecke+Devrient IP
(86) Internationale Anmeldenummer: PCT/EP2018/000290
(87) Internationale Veröffentlichungsnummer: WO 2019/057322

(56) Entgegenhaltungen:
- EP-A1- 2 062 947
- WO-A2-02/083430
- WO-A2-2005/017048
- DE-A1- 102015 006 854

## Beschreibung

Die Erfindung betrifft ein Verfahren zur Herstellung von Pigmenten.

Datenträger, wie Wert- oder Ausweisdokumente, aber auch andere Wertgegenstände, wie etwa Markenartikel, werden zur Absicherung oft mit Effektpigmenten versehen, die eine Überprüfung der Echtheit des Datenträgers gestatten und die zugleich als Schutz vor unerlaubter Reproduktion dienen. Effektpigmente können beispielsweise in das Substrat des Datenträgers integriert sein oder auf das Substrat des Datenträgers aufgebracht werden. Pigmente mit vorgegebener Außenkontur sind eine bekannte Form solcher Effektpigmente.

Effektpigmente können unter anderem durch Beschichten eines Trägermaterials hergestellt werden, wobei anschließend die Beschichtung vom Träger abgelöst und zu kleinen Bruchstücken gemahlen wird. Diese Bruchstücke können als Pigmente in einem Bindemittel dispergiert und schließlich verdruckt werden. Durch die Herstellungsweise sind weder die Form der Pigmente noch ihre Größe genau definiert.

Es sind jedoch auch verschiedene Verfahren bekannt, um Pigmente mit vorgegebener Außenkontur zu erstellen.

Beispielsweise WO 2005/ 017048 A2 schlägt vor, das Trägermaterial entsprechend der gewünschten Pigmentkontur zu prägen und die Beschichtung auf dem geprägten Trägermaterial zu erstellen. Die Beschichtung wird von der Trägerschicht abgenommen und durch Mahlen und Sieben in Pigmente zerbrochen, die einen Durchmesser von 5 bis 100 µm haben können. Auch in EP 2 062 947 A1, welche eine verbesserte Prägestruktur vorschlägt, um die Kontur der Pigmente vorzugeben, wird die abgenommene Schicht in Pigmente zerbrochen.

In alternativen Lösungen werden die Pigmentschichten durch Lasern oder Ätzen in Pigmente strukturiert.

Die dennoch auftretenden Bruchstücke von Pigmenten mit einheitlicher Außenkontur müssen weiterhin - beispielsweise anhand ihrer Größe - ausgesiebt werden.

Der Erfindung liegt die Aufgabe zugrunde, ein flexibles aber kostengünstiges Herstellungsverfahren für Pigmente anzugeben, welches es insbesondere erlaubt Pigmente mit enger Pigmentgrößenverteilung zu erstellen.

Diese Aufgabe wird durch die Merkmale der unabhängigen Ansprüche gelöst. Weiterbildungen der Erfindung sind Gegenstand der abhängigen Ansprüche.

Es ist ein Grundgedanke der vorliegenden Erfindung eine rissbildende Schicht im Rahmen der Pigmentherstellung zu verwenden. Insbesondere kann dabei die Rissbildung zur Strukturierung in die einzelnen Pigmente verwendet werden.

In dem Verfahren zur Herstellung von Pigmenten wird eine erste Schicht auf einem Substrat erstellt, wird die erste Schicht strukturiert und werden die Pigmente vom Substrat gelöst. Vorliegend ist die erste Schicht eine rissbildende Schicht, so dass die erste Schicht durch das Entstehen von Rissen strukturiert wird. Vor dem Lösen der Pigmente vom Substrat wird eine Pigmentschicht auf die durch die Risse strukturierte erste Schicht aufgebracht.

Eine Strukturierung der Pigmente durch einen späteren Verfahrensschritt, beispielsweise durch Brechen der Pigmentschicht bei oder nach dem Lösen der Pigmente vom Substrat, wird somit vermieden. Die Größenverteilung der hergestellten Pigmente wird vorliegend durch den Vorgang der Rissbildung bestimmt.

Die Pigmente umfassen zumindest die Pigmentschicht und optional auch die erste Schicht. Die Pigmentschicht selbst kann mehrere Teilschichten umfassen, wie beispielsweise eine oder mehrere der folgenden Teilschichten: Reflektorschicht, insbesondere metallisch oder hochbrechend, Dielektrikum, Absorberschicht, insbesondere metallisch oder hochbrechend, Flüssigkristallschicht, magnetische Schicht und/oder Prägelackschicht.

Die Pigmentschicht wird bereits durch das Aufbringen auf die strukturierte erste Schicht (und in die Risse) in eine Vielzahl von Pigmentabschnitten strukturiert.

Die erste Schicht ist bevorzugt an die Pigmentschicht angepasst. Die Dicke der rissbildenden Schicht ist insbesondere größer als die Dicke der Pigmentschicht. Die Breite der auszubildenden Risse ist angepasst, um die Pigmentschicht in den Rissen aufzunehmen.

Die aufgebrachte Pigmentschicht liegt insbesondere mit Pigmentabschnitten auf Pigmentinseln der ersten Schicht auf und mit Pigmentresten - in den Rissen der ersten Schicht - auf dem Substrat auf.

Die erste Schicht bildet die Risse eigenständig aus, insbesondere im Rahmen einer Verfestigung, wie Trocknung oder Härtung, der ersten Schicht. Die Risse entstehen also insbesondere substratunabhängig. Eigenschaften des (Träger-)Substrates, wie dessen Biegbarkeit oder Ähnliches, verursachen die Rissbildung nicht. Das Volumen der ersten Schicht verringert sich bei der Verfestigung, so dass die Risse entstehen. Die Volumenänderung wird auch als der Schrumpf bezeichnet. Die erste Schicht kann eine Schicht mit hohem Schrumpf bei Trocknung sein. Alternativ wird die Verfestigung (und somit die Schrumpfung) durch Härtung ausgelöst, insbesondere Strahlenhärtung, wie UV-Härtung.

Ebenfalls vorteilhaft ist, dass die Rissbildung bereits den Schritt des Lösens unterstützt. Im Rahmen der Rissbildung entstehen keine ideal linearen oder glatten Kanten in der ersten Schicht. Durch die Rissbildung entstehen Pigmentinseln der ersten Schicht, welche zumindest eine Unterschneidung und/oder eine vergrößerte Seitenwandfläche aufweisen. Die Pigmentinseln weisen abgerissene Seitenwandflächen auf, die also eine entsprechend größere Fläche aufweisen als eine lineare Seitenwand. Die Pigmentinseln weisen zudem - insbesondere im Bereich der Seitenwandflächen - Unterschneidung auf. Sie sind also nicht mehr vollflächig mit dem Substrat verbunden, sondern partiell bereits vom Substrat gelöst. Die für den Schritt des Lösens theoretisch nötige, mechanische Kraft wird dadurch geringfügig verringert. Wichtiger ist der Vorteil, dass - aufgrund der größeren Oberfläche und der Unterschneidung - somit ein Lösungsmittel die lösliche Schicht besser auflösen kann. Insbesondere gelangt das Lösungsmittel trotz Pigmentresten in den Rissen auf dem Substrat an dessen lösliche Teilschicht.

Von der Gesamtfläche der ersten Schicht haben die Risse einen Flächenanteil von mindestens 2 %, bevorzugt mindestens 3% und weiter bevorzugt mindestens 5%, insbesondere liegt der Flächenanteil der Risse jeweils unter 15%, bevorzugt jeweils unter 12%, weiter bevorzugt jeweils unter 10%. Der Flächenanteil der Risse kann vorzugsweise 2 - 15%, bevorzugt 3 - 12% und weiter bevorzugt 5 - 10% betragen. Der Flächenanteil der Pigmentinseln liegt entsprechend bei weniger als 98%, bevorzugt weniger als 97% und weiter bevorzugt weniger als 95%, insbesondere jeweils über 85%, bevorzugt über 88% und weiter bevorzugt über 90%. In der Regel sind die Risse mehr als 100 nm breit, bevorzugt mehr als 200 nm breit, weiter bevorzugt mehr als 500 nm breit.

Die rissbildende Schicht kann bevorzugt (bereichsweise oder vollflächig) aufgedruckt werden. Andere bereichsweise oder vollflächige Beschichtungsmethoden, wie Aufrakeln, Aufsprühen etc. , können alternativ verwendet werden.

Bevorzugt wird die erste Schicht und/ oder ein Verfahrensparameter im Rahmen der Rissbildung so ausgewählt, dass Pigmente vorgegebener Größe erzeugt werden, insbesondere also mit Größen innerhalb einer Zielgrößenverteilung.

Um die Entstehung bestimmter Pigmentformen zu unterstützen, kann die erste Schicht bereichsweise, insbesondere streifenweise, rechteckig oder quadratisch, aufgebracht werden und/oder können Keimzellen für die Rissbildung vorgesehen werden. Man kann Keimzellen für die Rissbildung insbesondere in Form von partiellen Vertiefungen erstellen. Die Keimzellen sind also kleiner (in Tiefe und Länge) als die entstehenden Risse. Die Keimzellen können in dem Substrat oder in der ersten Schicht vorliegen. Sie sind so ausgebildet und zueinander angeordnet, dass die Form der Pigmente durch die Keimzellen bestimmt wird. Alternativ oder zusätzlich wird die erste Schicht in mehreren Bereichen, wie Streifen, Rechtecken oder Quadraten, aufgebracht, so dass in jedem Bereich eine Vielzahl von Pigmenten erzeugt werden. Die Form des Aufbringungsbereichs bestimmt (durch die vom Rand des Bereiches beginnende Rissbildung) die Form der Pigmente, z.b. streifenweise oder rechteckiger (oder quadratischer) Bereich => rechteckige (oder quadratische) Pigmente.

In ersten Ausgestaltungen für den Schritt des Lösens der Pigmente vom Substrat wird eine lösliche Schicht aufgelöst. Die Pigmentschicht (und die erste Schicht) ist bereits in Pigmente (bzw. in Pigmentabschnitte der Pigmentschicht und Pigmentinseln der ersten Schicht) strukturiert, so dass die Pigmente ohne mechanische Belastung - also Entstehung von weiteren Bruchstücken - vom Substrat gelöst wird. Eine Teilschicht des Substrates, auf welcher die erste Schicht liegt, kann aufgelöst werden. Als die Teilschicht kann vorteilhaft eine lösliche Lackschicht verwendet werden. Alternativ wird die erste Schicht selbst aufgelöst.

Die lösliche Schicht ist besonders bevorzugt wasserlöslich. Andere Lösungsmittel, wie organische Lösungsmittel, könnten alternativ verwendet werden. Organische Lösungsmittel sind jedoch teurer und oft nicht mit allen (denkbaren bzw. verwendeten) Pigmentschichten (oder Teilschichten) kompatibel.

In zweiten Ausgestaltungen für den Schritt des Lösens wird ein Zwischensubstrat verwendet, um die Pigmente vom Substrat abzuheben und damit zu lösen. Das Zwischensubstrat stabilisiert die Pigmente gegen mechanische Belastung beim Lösen. Die Pigmentschicht wird mit einem Zwischensubstrat in Kontakt gebracht, so dass die bereits strukturierte Pigmentschicht abschnittsweise an dem Zwischensubstrat anhaftet. Auf eine Trägerschicht des Zwischensubstrates oder auf die Pigmentschicht kann eine geeignete Haftschicht aufgebracht worden sein. Die Haftschicht sollte seinerseits wiederum löslich, insbesondere wasserlöslich sein. Durch Trennen von Zwischensubstrat und Substrat werden die Pigmente von dem Substrat gelöst.

Ein Zwischenprodukt zur Herstellung von Pigmenten, insbesondere nach einem der zuvor beschriebenen Abläufe, umfasst ein Substrat, eine erste Schicht sowie eine Pigmentschicht. Auf dem Substrat ist die erste Schicht angeordnet, welche als rissbildende Schicht Risse ausgebildet hat. Die Pigmentschicht ist auf der durch die Risse strukturierten ersten Schicht angeordnet und dadurch in eine Vielzahl von vom Substrat lösbaren Pigmenten strukturiert.

Durch das vorliegende Verfahren können Pigmente mit Größen aus einer vorgegebenen Größenverteilung ohne weitere Zwischenschritte hergestellt werden.

Das Zwischensubstrat umfasst zumindest eine Zwischensubstratschicht. In der Regel umfasst das Zwischensubstrat die Zwischensubstratschicht und eine Haftschicht. Die Haftschicht des Zwischensubstrats ist so ausgebildet, dass die Pigmentschicht stärker an der Haftschicht des Zwischensubstrats haftet als an dem Substrat. Die Haftschicht ist eine lösliche, insbesondere wasserlösliche, Schicht.

Die aus der Pigmentschicht entstandenen Pigmente können als flächige Pigmente oder plättchenförmige Pigmente bezeichnet werden.

Selbstverständlich sind (die) Pigmente für ein Drucken der Pigmente vorgesehen. Die - insbesondere von dem Substrat und/ oder dem Zwischensubstrat gelösten - Pigmente werden zu einer Druckfarbe verarbeitet. Eine Druckfarbe mit den Pigmenten wird gedruckt. Bevorzugt erfolgt der Druck als Siebdruck, dabei insbesondere mittels zonalem Rakeln. Alternativ kann das Pigment mittels Tiefdruck und optional mittels Flexodruck verdruckt werden. Die Druckfarbe umfasst die Pigmente sowie zumindest ein Lösungsmittel sowie optional ein Bindemittel. Insbesondere wenn die erzeugten Pigmente eine Pigmentgröße von weniger als 15 µm, vorzugsweise weniger als 10 µm, aufweisen, kann die Druckfarbe in einem Offsetdruckverfahren verwendet werden.

Das (Effekt-)Pigment kann zur Absicherung von Datenträgern, wie Wert- oder Ausweisdokumente, aber auch von anderen Wertgegenständen, wie etwa Markenartikel, vorgesehen sein. Die (Effekt-)Pigmente gestatten eine Überprüfung der Echtheit und dienen zugleich als Schutz vor unerlaubter Reproduktion. Die (Effekt-)Pigmente können beispielsweise in ein Substrat integriert werden oder auf ein Substrat aufgebracht, insbesondere gedruckt, werden.

Das Pigment weist eine Größe bzw. laterale Ausdehnung von weniger als 200 µm, insbesondere weniger als 60 µm, besonders bevorzugt unter 30 µm auf. Absehbar sind Pigmente mit Größen möglich zwischen 1 µm bis 200 µm, bevorzugt zwischen 10 µm und 100 µm, besonders bevorzugt zwischen 20 µm und 60 µm. Die Dicke der Pigmente liegt im Bereich von 30 nm bis 4 µm (bzw. bis 2 µm), bevorzugt zwischen 100 nm und 1 µm.

Als eine optische Effektschicht des Pigments kann eine Metallschicht verwendet werden, beispielsweise aus Aluminium, Chrom, Kupfer, Eisen, Nickel, Kobalt, Silber, Gold oder aus Legierungen der vorgenannten Metalle. Die Dicke der Metallschicht liegt zwischen 2 nm und 200 nm, bevorzugt zwischen 10 nm und 50 nm, besonders bevorzugt zwischen 15 nm und 30 nm.

Die optische Effektschicht kann als reflektierende oder semitransparente Schicht ausgebildet sein, anstelle einer Metallschicht kann dabei eine hochbrechende Schicht (HRI-Schicht) vorgesehen werden. Bevorzugt umfasst das Pigment einen Dreischichtaufbau, der als farbkippendes und/oder farbfilternder Aufbau gestaltet sein kann. Das Pigment kann durch den Dreischichtaufbau gebildet sein, oder den Dreischichtaufbau als tragende Teilschicht bzw. als optisch aktive Teilschicht umfassen. Bevorzugt bestehen die Dreischichtaufbauten aus einer semitransparenten Metallschicht, einem Dielektrikum und einer reflektierenden (oder semitransparenten) Metallschicht. Als Dielektrika werden zum Beispiel SiO2, ZnS, MgF2 oder TiO2 verwendet.

Besonders bevorzugt sind zumindest die optisch aktiven Teilschichten des Pigments symmetrisch zur Pigmentebene vorgesehen. Somit ist eine Orientierung des Pigments nach dem Druckvorgang unerheblich. Beispielsweise kann das Pigment durch zwei identische semitransparente Teilschichten mit einer tragenden Abstandsschicht gebildet sein. Solche Pigmente weisen bevorzugt in Aufsicht einen metallischen Glanz mit einem bestimmten Farbspektrum auf, während sie in Durchsicht ein zu diesem Farbspektrum komplementäres Spektrum zeigen, besonders bevorzugt Gold in Aufsicht und Blau in Durchsicht. In einer anderen Variante sind symmetrisch um eine gemeinsam genutzte reflektierende Schicht (oberhalb und unterhalb) jeweils eine dielektrische und eine semitransparente Schicht vorgesehen.

Damit die Pigmente in ihrer Orientierung durch ein Magnetfeld beeinflussbar sind, kann eine magnetische Schicht verwendet werden, die beispielsweise aus den Metallen Eisen, Nickel, Kobalt oder aus Eisenoxid, insbesondere Magnetit (Fe3O4) oder aus Legierungen, welche diese Metalle enthalten, gebildet werden können. Solche Legierungen enthalten bevorzugt weitere Elemente wie Si, Nd, B, Gd, Sm, Sr, Ba oder Mn. Bevorzugt sind es nickelfreie magnetische Legierungen aus Fe, Cr und/oder Al, wie sie beispielsweise in EP2402401A1 verwendet werden. Die magnetische Schicht befindet sich vorteilhaft im Inneren der Pigmente. In einer besonders vorteilhaften Variante ist die magnetische Teilschicht zwischen zwei reflektierenden Teilschichten, beispielsweise aus Aluminium, vorgesehen. Besonders bevorzugt weisen die Pigmente eine zentrale magnetische Schicht auf, die beidseitig (symmetrisch) mit einem Dreischichtaufbau versehen ist, also insbesondere auf beiden Seiten jeweils - von innen nach außen - eine reflektierende Schicht (vorzugsweise eine reflektierende metallische Schicht), eine Abstandsschicht (vorzugsweise eine dielektrische Schicht) und eine Absorberschicht (vorzugsweise eine semitransparente metallische Schicht) umfasst. Der entsprechende (beidseitige) Interferenzschichtaufbau kann alternativ nur mittels dielektrischer Schichten (wie TiO2 oder SiO2) realisiert werden.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen.

Es zeigen:
- Fig. 1a - d: Schichtaufbau zu verschiedenen Zeitpunkten der Herstellung von Pigmenten mittels einer rissbildenden Schicht;
- Fig. 2a, b: zwei unterschiedliche Beispiele von Rissen in einer rissbildenden Schicht in Aufsicht;
- Fig. 3: zeitlicher Verlauf der Rissbildung in einer Ausgestaltung mit mehreren Streifen der rissbildenden Schicht;
- Fig. 4 und 5: Lösen der Pigmente vom Substrat mit Hilfe eines Zwischensubstrates; und
- Fig. 6: Verwendung von Keimzellen für die Rissbildung im Querschnitt des Schichtaufbaus und für drei verschiedene Pigmentformen in Aufsicht.

Die Herstellung von Pigmenten mit enger Größenverteilung mittels Risstemplate wird im Folgenden an verschiedenen Beispielen beschrieben.

Risstemplate meint dabei eine Schicht auf einer Trägerfolie (z.B. PET), die ein Netzwerk an durchgehenden Rissen aufweist, sodass die gesamte Schicht letztlich aus einzelnen Inseln besteht. Dieses Risstemplate wird metallisiert, wobei an den Inselrändern die Metallisierung durch den Höhenunterschied abreisst und die Inselgröße dadurch die Pigmentgröße bestimmt. Die Pigmentschicht ist durch die Rissbildung strukturiert.

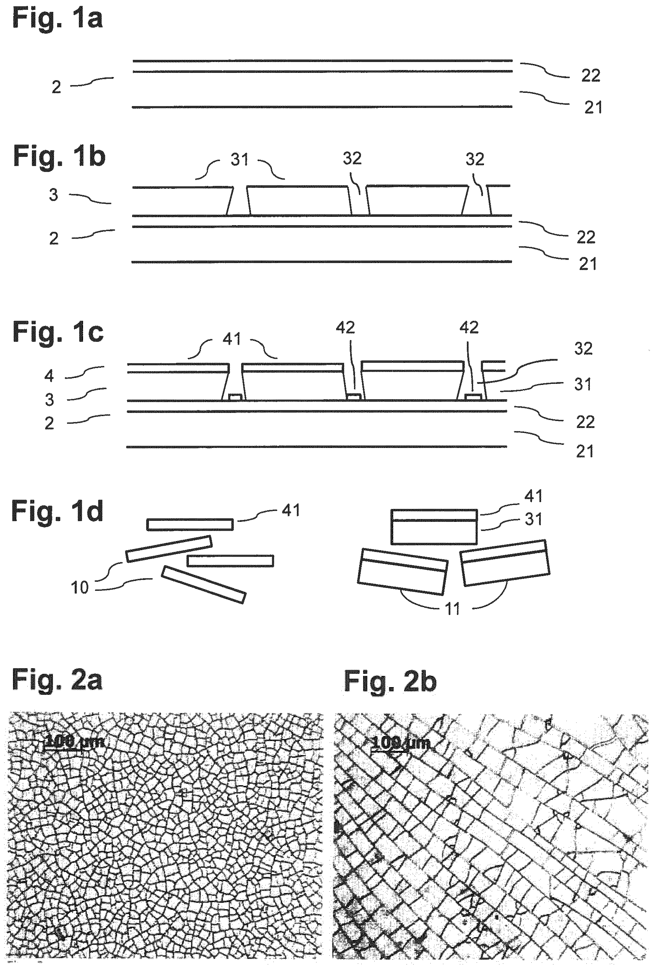

Fig. 1a zeigt eine Trägerfolie 2, die eine Trägerschicht 21 und eine optionale Release-Schicht 22 umfasst. Auf die Trägerfolie 2 wird - wie in Fig. 1b dargestellt - eine durchgehende rissbildende Schicht 3 aufgebracht, in welcher sich Risse 32 ausbilden, so dass Pigmentinseln 31 entstehen.

Eine Pigmentschicht 4 wird - wie in Fig. 1c dargestellt - auf die rissbildende Schicht 3 aufgebracht. Die Pigmentschicht 4 umfasst Pigmentabschnitte 41, die auf den Pigmentinseln 31 liegen. Zudem umfasst die Pigmentschicht - in den Rissen 32 angeordnete - Pigmentreste 42, die auf der Trägerfolie bzw. dessen Release-Schicht 22 liegen. Die Pigmentschicht 4 kann eine Metallisierung sein oder umfassen. Die Pigmentschicht kann mehrere Teilschichten umfassen, insbesondere symmetrische Mehrschichtaufbauten aufweisen.

Beispielsweise kann das Pigment als Teilschichten umfassen: eine oder mehrere Reflektorteilschichten, eine oder mehrere dielektrische Teilschichten und eine oder mehrere Absorberteilschichten, beispielsweise in einem Aufbau mit Absorber-Dielektrikum-Reflektor, Dielektrikum-Absorber-Dielektrikum, Dielektrikum-Reflektor-Dielektrikum oder Absorber-Dielektrikum-Absorber.

Um die Pigmente zu erhalten, ist das Risstemplate entweder von der Folie lösbar (das Risstemplate löst sich von der Folie, bleibt aber mit den anderen Pigmentschichten verbunden) oder das Risstemplate ist selbst wasserlöslich bzw. in einem anderen Lösungsmittel löslich, sodass es sich - vorliegend nach dem Trennen der Substrate - auflöst und das Pigment freigibt.

Es lassen sich somit zwei Pigmentarten herstellen:
- Pigmente, die aus einer ersten Pigmentteilschicht, wie beispielsweise einer aufgedampften Metallisierung, und aus der rissbildenden Schicht bestehen; oder
- Pigmente, die nur aus der Pigmentschicht, wie beispielsweise einer aufgedampften Metallschicht, bestehen (ohne rissbildende Schicht).

Fig. 1d zeigt eine Vielzahl von Pigmenten 10, 11. Die Pigmente 10 umfassen nur die Pigmentschicht 4, also gegebenenfalls auch dessen Teilschichten. Die Pigmente 11 umfassen dagegen sowohl die Pigmentschicht 4, bzw. dessen Teilschichten, als auch die rissbildende Schicht 3. Die Form und die Größe der Pigmente 10, 11 entspricht Form und Größe der Pigmentinseln 31 (bzw. der Pigmentabschnitte 41).

Die rissbildende Schicht kann zur Stabilität der Pigmente beitragen oder das rissbildende Material kann funktionelle Eigenschaften besitzen (z.B. fluoreszierende Farbstoffe oder magnetische Partikel).

Es sind verschiedene Möglichkeiten bekannt, das Risstemplate herzustellen.

In einer ersten Ausführung bildet eine auf einer Trägerfolie vollflächig aufgebrachte Dispersion mit genügend hoher Mindestfilmbildungstemperatur (MFT > 50°C) beim physikalischen Trocknen Risse. Die Dispersion besteht aus in Wasser dispergierten Teilchen organisch-polymerer (z.B. auf Basis von Polyacrylate, Polystyrole, usw.) oder anorganischer (z.B. SiO2, TiO2, Al2O3, usw.) Natur oder Mischungen daraus. Um eine Löslichkeit des Risstemplates in Wasser zu gewährleisten, können wasserlösliche Verbindungen (z.B. Zuckermoleküle, Stärke oder Polyethyleneglykole usw.) zugesetzt werden.

In einer anderen Ausführungsform wird ein Risstemplate mittels der Sol Gel Technik hergestellt. Dabei kommen Alkoholate von Metallen und Nichtmetallen zum Einsatz, die unter Hydrolyse und Kondensationsreaktionen Solpartikel ausbilden. Letztlich bilden sie ein Gel, welches in dünnen Schichten beim Trocknen zu Rissbildung neigt.

In einer weiteren Ausführungsform wird ein spröder UV-Lack mit hohem Schrumpf vollflächig auf eine Trägerfolie aufgebracht. Während der Strahlenhärtung bilden sich aufgrund des Schrumpfes durchgängig Risse.

Dieses Risstemplate kann beispielsweise metallisiert werden, um die Pigmente zu erhalten. Idealerweise ist der UV-Lack so gestaltet, dass er sich in Wasser von selbst ablöst (wasserlösliche UV-Lacke). Für wasserunlösliche UV-Lacke ist eine wasserlösliche Zwischenschicht denkbar, um die Pigmente in Wasser von der Ausgangsfolie zu lösen. Auf der Trägerfolie 2 ist dann eine entsprechende Release-Schicht 22 vorgesehen. Die Releaseschicht 22 ist in einem Lösemittel löslich, vorzugsweise in Wasser als Lösungsmittel alternativ in einem organische Lösungsmittel.

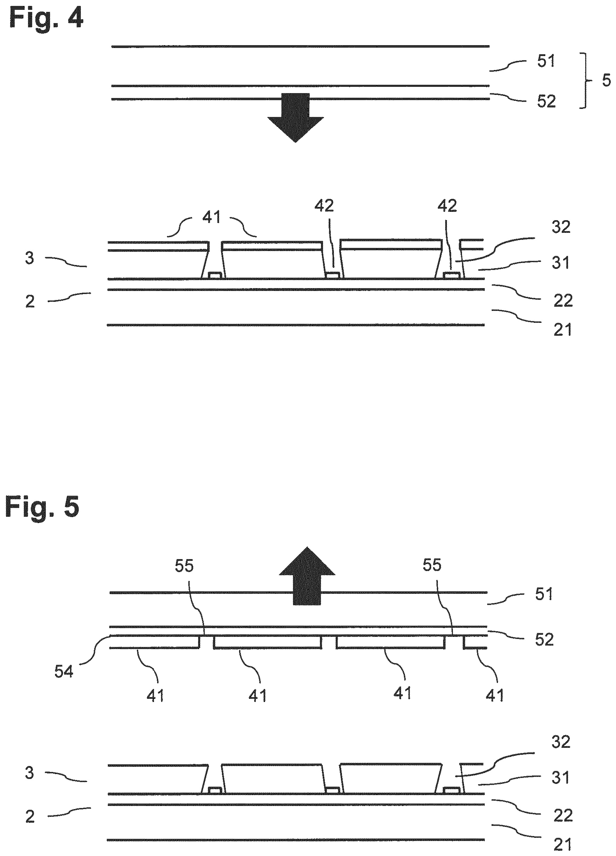

Eine Gegenkaschierfolie mit Kleber kann die Pigmente ebenso von der Trägerfolie lösen, wobei der Kleber anschließend aufgelöst wird und so die Pigmente freigibt. Diese Variante wird später mit Bezug auf Fig. 4 und 5 genauer beschrieben.

Die Steuerung der Rissbildung ist für die Größenverteilung und Form der Pigmente ausschlaggebend und abhängig von der gewählten Herstellungsmethode des Risstemplates. Für physikalisch trocknende Dispersionen erfolgt die Einstellung der Inselgröße (=Pigmentgröße) über die bekannten Parameter wie Mindestfilmbildungstemperatur, Schichtdicke, Partikelgröße, Additivierung oder Trocknungsbedingung.

Fig. 2a zeigt eine Aufnahme eines Risstemplates, wobei die Risse Inseln mit einer Größe aus einem Größenbereich bilden. Die Inselgröße und somit die Pigmentgröße ist < 100 µm, insbesondere im Bereich von 10 bis 30 µm (Flächen von 100 bis 900 µm²).

Darüber hinaus ist es bekannt, dass die erste Generation an Rissen senkrecht vom Rand des Druckbildes nach innen reißt, woraufhin die zweite Generation an Rissen nun parallel zum Rand des Druckbildes und somit zwischen der ersten Rissgeneration entsteht. Das daraus resultierende leiterartige Risstemplate führt zu rechteckigen Inseln bzw. Pigmenten. Fig. 2b zeigt die Aufnahme eines entsprechenden Risstemplates, mit etwas größeren Inseln.

Die Pigmentgröße liegt hier ebenfalls unter 100 µm, jedoch eher im Bereich von 20 bis 60 µm (Flächen von 400 bis 3600 µm2).

Mit zunehmender Entfernung vom Rand des Druckbildes nimmt dieser Effekt jedoch ab. Sind nur rechteckige Inseln gewünscht, erfolgt eine Bedruckung der Folie in Streifen.

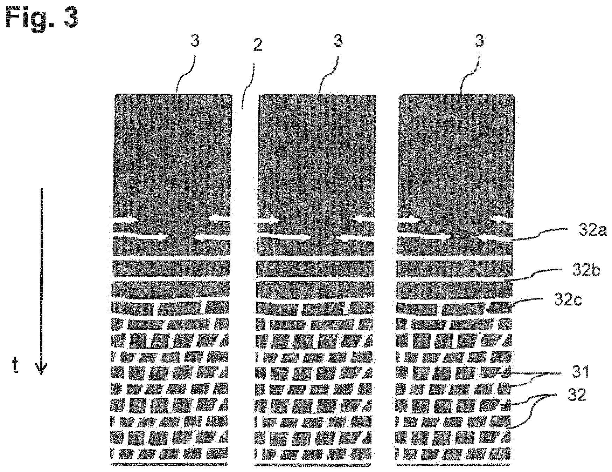

Fig. 3 zeigt drei Streifen einer rissbildenden Schicht 3 auf dem Träger 2. Zur Illustration sind in der Figur die Phasen der Trocknung und Rissbildung von oben nach unten dargestellt. Der Zeitpfeil t symbolisiert dass hier ein zeitlicher Verlauf von oben nach unten dargestellt ist. Die nasse rissbildende Schicht 3 ist noch frei von Rissen. Erste Risse 32a entstehen beim Trocknen vom Rand der Streifen nach innen. Die Risse 32b der ersten Generation reichen dann von Rand zu Rand über den Streifen. Risse 32c entstehen dann parallel zum Rand. Die trockene rissbildende Schicht umfasst die nahezu rechteckigen Pigmentinseln 31 sowie die dazwischen angeordneten Risse 32.

Hexagonale Inseln und damit Pigmente sind auf anderem Weg ebenfalls möglich.

Für Risstemplates auf Basis von UV-Lacken kann eine Sollbruchstelle bei der Strahlenhärtung durch geeignete Strukturen auf einem Prägewerkzeug eingeführt werden. Das Prägewerkzeug drückt bspw. zwei Kerben in oder durch den UV-Lack (vgl. Nanoimprinting), wobei nach Strahlenhärtung aufgrund des Schrumpfes ein Riss auf kürzester Entfernung zwischen den zwei Kerben initiiert wird. Durch bestimmte Anordnung der Kerben können die Risse nun in Linien und Gittern gezielt gesteuert werden.

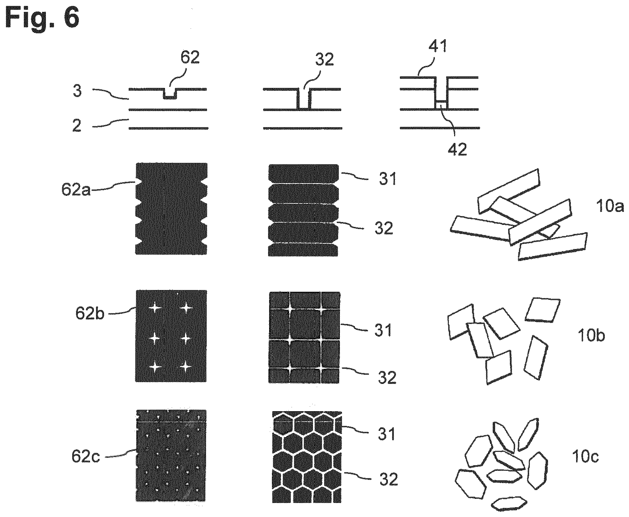

Fig. 6 zeigt in der obersten Reihe eine Kerbe 62 in der rissbildenden Schicht, die auf dem Trägersubstrat 2 angeordnet ist. Die Kerbe 62 dient nur als Keimzelle für die Rissbildung und kann daher kleiner, insbesondere schmaler und kürzer, als der spätere Riss 32 sein. Ebenso ist es ausreichend, wenn die Kerbe 62 nur teilweise in die rissbildende Schicht 3 hinein reicht. Auf die rissbildende Schicht wird die Pigmentschicht aufgetragen, so dass die Pigmentabschnitte 41 entstehen.

Durch die Vielfalt der Anordnung der Kerben zueinander und die Art der Kerben an sich ist eine Vielfalt an Formen für die Inseln und daher Pigmenten gegeben.

In der zweiten Reihe von Fig. 6 werden dreieckige Randkerben 62a verwendet, um lineare Risse 32 zu erzeugen, so dass rechteckige Pigmente 10 a entstehen. Die dritte Reihe zeigt dass mittels entsprechender Anordnung sternförmigen Kerben 62b quadratische Pigmente 10b hergestellt werden können.

Selbstverständlich können durch diese Methode auch ganz einfach hexagonale Pigmente 10c hergestellt werden, indem Kerben 62c ähnlich einem dreizackigen Stern Risse 32 in 120° Winkeln zueinander generieren.

Die Pigmentschicht bzw. eine oder mehrere der Teilschichten werden insbesondere aufgedampft, z.b. mittels PVD-Beschichten. Dabei werden die zuvor beschriebenen Teilschichten oder Unterschichten der Teilschichten aufgebracht. Alternativ könnte eine Teilschicht, insbesondere eine metallische Schicht, auch mittels Tief- oder Flexodruckverfahren appliziert werden.

Das Substrat kann für das vorliegende Verfahren auch wiederverwendet werden, optional nachdem die Restabschnitte vom Substrat abgelöst worden sind. Auf dem Substrat mit Reliefstruktur, der ersten Folie, kann mehrfach hintereinander rissbildende Schicht und Pigmentschicht erstellt werden. Somit können Materialkosten und Prozess-Schritte gespart werden.

### Bezugszeichenliste

- 10, 10a, 10b, 10c, 11: Pigment

- 2: Ausgangssubstrat
- 21: Trägerschicht des Ausgangssubstrats
- 22: Ablöse-Schicht des Ausgangssubstrats

- 3: Rissbildende Schicht
- 31: Pigmentinsel
- 32, 32a, 32b, 32c: Risse

- 4: Pigmentschicht
- 41: Pigmentabschnitte
- 42: Restabschnitte

- 5: Zwischensubstrat
- 51: Trägerschicht des Zwischensubstrats
- 52: Haftschicht des Zwischensubstrats
- 54: Haftschicht mit Pigmentabschnitten
- 55: freie Haftschichtabschnitte

- 62, 62a, 62b, 62c: Keimzellen für Rissbildung

## Patentansprüche

1. Verfahren zur Herstellung von Pigmenten (1), mit den Schritten:
- Erstellen einer ersten Schicht (3) auf einem Substrat (2);
- Strukturieren der ersten Schicht (3); und
- Lösen der Pigmente (10,11) vom Substrat (2);
**dadurch gekennzeichnet, dass**
die erste Schicht (3) eine rissbildende Schicht ist, so dass die erste Schicht durch das Entstehen von Rissen (32) strukturiert wird; und
vor dem Lösen der Pigmente (10,11) eine Pigmentschicht (4) auf die durch die Risse (32) strukturierte erste Schicht (3) aufgebracht wird.

2. Verfahren nach Anspruch 1, **dadurch gekennzeichnet, dass** die Pigmente (10,11) umfassen:
- die Pigmentschicht (4) oder
- die Pigmentschicht (4) und die erste Schicht (3).

3. Verfahren nach Anspruch 1 oder 2, **dadurch gekennzeichnet, dass** die Pigmentschicht (4) durch das Aufbringen auf die strukturierte erste Schicht (3) in eine Vielzahl von Pigmentabschnitten (41) strukturiert wird.

4. Verfahren nach einem der Ansprüche 1 bis 3, **dadurch gekennzeichnet, dass** die aufgebrachte Pigmentschicht (4) mit Pigmentabschnitten (41) auf Pigmentinseln (31) der ersten Schicht (3) und mit Pigmentresten (42) in den Rissen (32) auf dem Substrat liegt.

5. Verfahren nach einem der Ansprüche 1 bis 4, **dadurch gekennzeichnet, dass** die erste Schicht (3) die Risse (32) selbst bildet, insbesondere im Rahmen einer Verfestigung, wie Trocknung oder Härtung, der ersten Schicht (3).

6. Verfahren nach einem der Ansprüche 1 bis 5, **dadurch gekennzeichnet, dass** die erste Schicht (3) und/oder ein Verfahrensparameter im Rahmen der Rissbildung angepasst ist, um Pigmente (10,11) vorgegebener Größe, insbesondere mit Größen innerhalb einer Zielgrößenverteilung, zu erzeugen.

7. Verfahren nach einem der Ansprüche 1 bis 6, **dadurch gekennzeichnet, dass** Keimzellen (62) für die Rissbildung in Form von partiellen Vertiefungen erstellt werden, insbesondere in dem Substrat (2) oder der ersten Schicht (3), so dass die Form der Pigmente durch die Keimzellen (62) bestimmt wird.

8. Verfahren nach einem der Ansprüche 1 bis 7, **dadurch gekennzeichnet, dass** die erste Schicht (3) in mehreren Streifen aufgebracht wird.

9. Verfahren nach einem der Ansprüche 1 bis 8, **dadurch gekennzeichnet, dass** die Pigmentschicht (4) mehrere Teilschichten umfasst.

10. Verfahren nach einem der Ansprüche 1 bis 9, **dadurch gekennzeichnet, dass** im Schritt des Lösens der Pigmente (10,11) von dem Substrat (2) eine lösliche Schicht (22, 3) aufgelöst wird.

11. Verfahren nach Anspruch 10, **dadurch gekennzeichnet, dass** die lösliche Schicht eine Teilschicht (22) des Substrats (2) oder die erste Schicht (3) ist.

12. Verfahren nach Anspruch 10 oder 11, **dadurch gekennzeichnet, dass** die lösliche Schicht (22,3) wasserlöslich ist.

13. Verfahren nach einem der Ansprüche 1 bis 9, **dadurch gekennzeichnet, dass** das Verfahren die weiteren Schritte umfasst:
in Kontakt bringen der Pigmentschicht (4) mit einem Zwischensubstrat (5), wobei die strukturierte Pigmentschicht (4) abschnittsweise an dem Zwischensubstrat (31) anhaftet; und
Trennen von Zwischensubstrat (5) und Substrat (2), wobei die Pigmente (10, 11) durch den Schritt des Trennens von dem Substrat (2) gelöst werden.

14. Verfahren nach Anspruch 13, **dadurch gekennzeichnet, dass** zumindest die Pigmentschicht (4) an einer löslichen Schicht (52) des Zwischensubstrates (5) anhaftet, welche insbesondere auf einer Folienschicht (51) des Zwischensubstrates (5) angeordnet ist.

15. Zwischenprodukt zur Herstellung von Pigmenten (10,11), insbesondere nach einem der Ansprüche 1 bis 14, mit einem Substrat (2) auf welchem angeordnet sind:
- eine erste Schicht (3), wobei die erste Schicht (3) als rissbildende Schicht Risse (32) ausgebildet hat; und
- eine Pigmentschicht (4), die auf der durch die Risse (32) strukturierten ersten Schicht (3) angeordnet ist und dadurch in eine Vielzahl von vom Substrat lösbaren Pigmenten (10,11), gebildet zumindest durch die Pigmentschicht (4) und optional durch die erste Schicht (3), strukturiert ist.

## Claims

1. Process for producing pigments (1), comprising the following steps:
- creating a first layer (3) on a substrate (2);
- structuring the first layer (3); and
- detaching the pigments (10, 11) from the substrate (2) ;
**characterized in that**
the first layer (3) is a crack-forming layer, so the first layer is structured by the formation of cracks (32); and
before the pigments (10, 11) are detached, a pigment layer (4) is applied to the first layer (3) structured by the cracks (32).

2. Process according to Claim 1, **characterized in that** the pigments (10, 11) comprise:
- the pigment layer (4) or
- the pigment layer (4) and the first layer (3).

3. Process according to Claim 1 or 2, **characterized in that** the pigment layer (4) is structured into a multiplicity of pigment portions (41) by the application to the structured first layer (3).

4. Process according to one of Claims 1 to 3, **characterized in that** the applied pigment layer (4) lies on the substrate with pigment portions (41) on pigment islands (31) of the first layer (3) and with pigment residues (42) in the cracks (32).

5. Process according to one of Claims 1 to 4, **characterized in that** the first layer (3) forms the cracks (32) itself, in particular in the course of a solidification, such as drying or hardening, of the first layer (3).

6. Process according to one of Claims 1 to 5, **characterized in that** the first layer (3) and/or a process parameter is adapted in the course of the crack formation in order to create pigments (10, 11) of a predefined size, in particular with sizes within a target size distribution.

7. Process according to one of Claims 1 to 6, **characterized in that** nucleation sites (62) for the crack formation in the form of partial depressions are created, in particular in the substrate (2) or the first layer (3), so the shape of the pigments is determined by the nucleation sites (62).

8. Process according to one of Claims 1 to 7, **characterized in that** the first layer (3) is applied in multiple strips.

9. Process according to one of Claims 1 to 8, **characterized in that** the pigment layer (4) comprises multiple sub-layers.

10. Process according to one of Claims 1 to 9, **characterized in that** a soluble layer (22, 3) is dissolved during the step of detaching the pigments (10, 11) from the substrate (2).

11. Process according to Claim 10, **characterized in that** the soluble layer is a sub-layer (22) of the substrate (2) or is the first layer (3).

12. Process according to Claim 10 or 11, **characterized in that** the soluble layer (22, 3) is water-soluble.

13. Process according to one of Claims 1 to 9, **characterized in that** the process comprises the following further steps:
bringing the pigment layer (4) into contact with an intermediate substrate (5), with some portions of the structured pigment layer (4) adhering to the intermediate substrate (31); and
separating the intermediate substrate (5) and the substrate (2), the pigments (10, 11) being detached by the step of separation from the substrate (2).

14. Process according to Claim 13, **characterized in that** at least the pigment layer (4) adheres to a soluble layer (52) of the intermediate substrate (5), the soluble layer being located in particular on a film layer (51) of the intermediate substrate (5).

15. Intermediate product for producing pigments (10, 11), in particular according to one of Claims 1 to 14, with a substrate (2) on which the following are arranged:
- a first layer (3), the first layer (3) as a crack-forming layer having formed cracks (32); and
- a pigment layer (4), which is located on the first layer (3) structured by the cracks (32) and as a result is structured into a multiplicity of pigments (10, 11), which can be detached from the substrate and are formed at least by the pigment layer (4) and optionally by the first layer (3).

## Revendications

1. Procédé de fabrication de pigments (1), avec les étapes suivantes :
- la création d'une première couche (3) sur un substrat (2) ;
- la structuration de la première couche (3) ; et
- le détachement des pigments (10, 11) du substrat (2) ;
**caractérisé en ce que**
la première couche (3) est une couche de formation de fissures, de telle sorte que la première couche est structurée par l'apparition de fissures (32) ; et
avant le détachement des pigments (10, 11), une couche de pigment (4) est appliquée sur la première couche (3) structurée par les fissures (32).

2. Procédé selon la revendication 1, **caractérisé en ce que** les pigments (10, 11) comprennent :
- la couche de pigment (4) ou
- la couche de pigment (4) et la première couche (3).

3. Procédé selon la revendication 1 ou 2, **caractérisé en ce que** la couche de pigment (4) est structurée en une pluralité de sections de pigment (41) par l'application sur la première couche structurée (3).

4. Procédé selon l'une quelconque des revendications 1 à 3, **caractérisé en ce que** la couche de pigment (4) appliquée repose sur le substrat avec des sections de pigment (41) sur des îlots de pigment (31) de la première couche (3) et avec des résidus de pigment (42) dans les fissures (32).

5. Procédé selon l'une quelconque des revendications 1 à 4, **caractérisé en ce que** la première couche (3) forme elle-même les fissures (32), notamment dans le cadre d'une consolidation, telle qu'un séchage ou un durcissement, de la première couche (3).

6. Procédé selon l'une quelconque des revendications 1 à 5, **caractérisé en ce que** la première couche (3) et/ou un paramètre de procédé est adapté dans le cadre de la formation de fissures pour produire des pigments (10, 11) de taille prédéterminée, notamment avec des tailles comprises dans une distribution de taille cible.

7. Procédé selon l'une quelconque des revendications 1 à 6, **caractérisé en ce que** des cellules germes (62) pour la formation de fissures sont créées sous forme de creux partiels, notamment dans le substrat (2) ou la première couche (3), de telle sorte que la forme des pigments est déterminée par les cellules germes (62).

8. Procédé selon l'une quelconque des revendications 1 à 7, **caractérisé en ce que** la première couche (3) est appliquée en plusieurs bandes.

9. Procédé selon l'une quelconque des revendications 1 à 8, **caractérisé en ce que** la couche de pigment (4) comprend plusieurs couches partielles.

10. Procédé selon l'une quelconque des revendications 1 à 9, **caractérisé en ce que**, dans l'étape de détachement des pigments (10, 11) du substrat (2), une couche détachable (22, 3) est détachée.

11. Procédé selon la revendication 10, **caractérisé en ce que** la couche détachable est une couche partielle (22) du substrat (2) ou la première couche (3).

12. Procédé selon la revendication 10 ou 11, **caractérisé en ce que** la couche détachable (22, 3) est détachable dans l'eau.

13. Procédé selon l'une quelconque des revendications 1 à 9, **caractérisé en ce que** le procédé comprend les étapes supplémentaires suivantes :
la mise en contact de la couche de pigment (4) avec un substrat intermédiaire (5), la couche de pigment structurée (4) adhérant par sections au substrat intermédiaire (31) ; et
la séparation du substrat intermédiaire (5) et du substrat (2), les pigments (10, 11) étant détachés du substrat (2) par l'étape de séparation.

14. Procédé selon la revendication 13, **caractérisé en ce qu'**au moins la couche de pigment (4) adhère à une couche détachable (52) du substrat intermédiaire (5), qui est notamment agencée sur une couche de film (51) du substrat intermédiaire (5).

15. Produit intermédiaire pour la fabrication de pigments (10, 11), notamment selon l'une quelconque des revendications 1 à 14, avec un substrat (2) sur lequel sont agencés :
- une première couche (3), ladite première couche (3) ayant formé des fissures (32) en tant que couche de formation de fissures ; et
- une couche de pigment (4) agencée sur la première couche (3) structurée par les fissures (32) et ainsi structurée en une pluralité de pigments (10, 11) détachables du substrat, formés au moins par la couche de pigment (4) et éventuellement par la première couche (3).
